(19) Europäisches Patentamt European Patent Office Office européen des brevets

(11) **EP 1 831 884 B1**

(12) **EUROPEAN PATENT SPECIFICATION**

(45) Date of publication and mention
of the grant of the patent:
**30.04.2008 Bulletin 2008/18**

(51) Int Cl.:
***G11B 7/135*** *(2006.01)*     ***G02B 3/02*** *(2006.01)*
***G02B 3/12*** *(2006.01)*

(21) Application number: **05825461.6**

(22) Date of filing: **15.12.2005**

(86) International application number:
**PCT/IB2005/054273**

(87) International publication number:
**WO 2006/067707 (29.06.2006 Gazette 2006/26)**

(54) **OPTICAL SCANNING DEVICE**

OPTISCHE ABTASTVORRICHTUNG

DISPOSITIF DE BALAYAGE OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2004 EP 04106759**

(43) Date of publication of application:
**12.09.2007 Bulletin 2007/37**

(73) Proprietor: **Koninklijke Philips Electronics N.V.
5621 BA Eindhoven (NL)**

(72) Inventors:
• **TUKKER, Teunis, W.
NL-5656 AA Eindhoven (NL)**
• **VREHEN, Joris, J.
NL-5656 AA Eindhoven (NL)**
• **HENDRIKS, Bernardus, H., W.
NL-5656 AA Eindhoven (NL)**
• **KUIPER, Stein
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**WO-A-20/04027490**     **WO-A-20/04077125**
**US-A- 6 078 554**

## Description

FIELD OF THE PRESENT INVENTION

The present invention relates to an optical scanning device, particularly but not exclusively one which comprises a switchable optical element for scanning the information layers of different types of optical record carrier.

BACKGROUND

Data can be stored in the form of information layers of optical record carriers such as compact discs (CDs), conventional digital versatile discs (DVDs) and so-called Blu-Ray™ discs (BDs).

Blu-Ray™ discs have recently been proposed following the advent of blue laser diodes that emit radiation at a significantly shorter wavelength than the red laser diodes used to read or write data from conventional DVDs. As the wavelength of the blue laser diode is shorter than that of more commonly used red laser diodes, the blue laser diode can form a smaller spot on the disc, and hence the information layer tracks of Blu-Ray™ discs can be more closely spaced than those of conventional DVDs, which in turn means that Blu-Ray™ discs can have a greater storage capacity than conventional DVDs - typically at least a twofold increase in storage capacity can be obtained.

To avoid customers having to purchase a variety of different devices for reading or writing data from or to specific types of optical record carrier, it is desirable for a single optical scanning device to be capable of reproducing data from a number of optical record carriers of different formats.

However, this aim is not easy to accomplish as the different record carrier formats and the associated scanning devices have differing characteristics. For example, CDs are available, inter alia, as CD-A (CD-audio), CD-ROM (CD-read only memory) and CD-R (CD-recordable), and are designed to be scanned with a laser wavelength of about 785 nm and a numerical aperture (NA) of 0.45. DVDs, on the other hand, are designed to be scanned at a laser wavelength in the region of 650 nm, and Blu-Ray™ discs are designed to be scanned at a laser wavelength in the region of 405 nm. For reading DVDs an NA of 0.6 is generally used, whereas for writing DVDs an NA of 0.65 is generally required.

A complicating factor is that discs designed to be read out at a certain wavelength are not always readable at another wavelength. An example is the CD-R in which special dyes are applied in the recording stack in order to obtain a high signal modulation at 785 nm wavelength. At 650 nm wavelength the modulation of the signal from the disc becomes so small due to the wavelength sensitivity of the dye that readout at this wavelength is not feasible.

When introducing a new record carrier system with higher data capacities it is important that the new devices for reading and writing are backward compatible with the existing record carriers in order to obtain a high acceptance level in the market. Therefore, the DVD system must contain a 785 nm laser and a 650 nm laser to be able to read all existing CD types. Similarly, a system capable of reading all of CD, DVD and Blu-Ray™ discs should contain a 785 nm laser, a 650 nm laser and a 405 nm laser.

Different types of record carrier also differ in the thickness of their transparent substrates, which typically act as a protective layer for the data carrying layer of the disc, and as a result the depth of the data layer from the entrance face of the record carrier varies from record carrier type to record carrier type. For example, the data layer depth for DVDs is about 0.6mm, whereas the data layer depth for CDs is about 1.2mm. The spherical aberration incurred by the radiation beam traversing the protective layer is generally compensated in an objective lens of the optical scanning device.

As a result of these different characteristics for different types of record carrier, problems can result if it is attempted to read data, for example, from a record carrier with an optical scanning device that has been optimized for another, different type of record carrier. For example, large amounts of spherical aberration and a non-negligible amount of spherochromatism can be caused if one type of carrier medium is read with an objective lens that has been optimized for another. The device could be provided with three objective lenses, one for each wavelength. However, this solution would be relatively expensive.

It is therefore highly preferable to provide a device which has a single optical objective lens for scanning a variety of different optical carrier mediums using different wavelengths of laser radiation.

International patent application WO 02/082437 describes such an objective lens for use within an optical scanning device for reading data from three different types of record carrier. The lens has a phase structure which is arranged in the path of the radiation beam. This phase structure comprises a plurality of phase elements of different heights which when viewed in profile are arranged as a series of steps. The different heights of the phase elements are related and arranged so as to produce a desired wavefront modification of the radiation beam of a specific wavelength for reading a specific type of record carrier.

As a result, when using a single objective to readout all discs, different amounts of spherical aberration for each disc type must be generated by the objective in order to cope with the difference in cover layer thickness. For two wavelength objective lenses, such as those used in a DVD/CD compatible lens, a non-periodic phase structure (NPS) or different diffractive structures on a lens designed for one mode can be used to correct the spherical aberration in the other mode. In the case of three wavelength systems, such as those used in CD/DVD/BD systems, the demands for such a NPS or diffractive structure are very severe since the structure has to compensate different amount of spherical aberration in two modes, while leaving the third mode unaffected.

Various systems have been proposed in which a fluid system is used to provide an optical element with variable characteristics.

US patent 5,973,852 describes a fluid filled variable power optical lens. The lens includes a housing having an optically transparent elastic membrane disposed over one end of a chamber which contains a fluid. A pump assembly is used for inserting or withdrawing fluid from the chamber, whereby the membrane is correspondingly selectively bulged outwardly or inwardly in the shape of a convex or concave lens.

International patent application WO 00/58763 describes an electrowetting based system whereby the curvature of a fluid meniscus between two different fluid bodies can be changed. It is proposed that the system may be used as a variable lens.

US patent 6,288,846 describes systems in which a fluid system can be switched between two different discrete states in order to provide different wavefront modifications. A refractive index difference of approximately zero is established between a fluid and a wavefront modifier, when the system is in one of these states, in order to leave the radiation beam unchanged. In the other state of the system this refractive index difference is of a sufficient value such that the path of the radiation beam is modified. A fluid-handling system is used to switch the fluid system. Examples of the fluid handling system include manually or motorized hypodermic syringes, peristaltic pumps, compressible bulbs, and piezoelectric, hydraulic or pneumatic actuators.

US patent 6,408,112 describes an optical switch which includes a fluid system housed in channels and cavities within the component. Piezoelectric actuators, which are arranged in the cavities, cause the liquid to be displaced in the channels. In one embodiment, the liquid passes over the face of a wavefront modifier including a relief structure in the form of a Fresnel lens. In one embodiment, one of the two fluid components of the fluid system is a gas which is compressed when the liquid is moved into place over the relief structure. However, such a component requires an upright orientation to be maintained in order to prevent the gas from being located at the part of the system containing the piezoelectric pump. It is also described that two suitable liquids may be used. However, one drawback is the reliability of the switching process, particularly when a relief structure is used, where fluid flow is not entirely smooth. Requiring smooth fluid flow during switching also limits the speed of switching.

International patent application WO 04/027490 describes a non-periodic structure (NPS) in a binary switchable electrowetting cell, capable of reducing wavefront aberration just below the diffraction limit.

SUMMARY OF THE INVENTION

In accordance with the present invention there is provided an optical scanning device for scanning optical record carriers having cover layers of different thicknesses, the scanning device having a first mode for scanning a first optical record carrier, a second mode for scanning a second optical record carrier and a third mode for scanning third optical record carrier, the device comprising an objective lens system and a switchable optical element having a first discrete state and a different, second discrete state, the element comprising:

a) a fluid system including a first fluid and a different, second fluid;
b) a wavefront modifier; and
c) a fluid system switch for acting on the fluid system to switch between the first and second discrete states of the element,

wherein, when the element is in the first discrete state, the wavefront modifier is substantially covered by the first fluid, and
when the element is in the second discrete state, the wavefront modifier is substantially covered by the second fluid,
the wavefront modifier including a phase structure including a plurality of stepped annular zones,
characterized in that the wavefront modifier further includes an aspherical surface, the scanning device being arranged to operate using said element in said second state to generate spherical aberration when in said second mode, the aspherical surface of the element in the second state compensating for more than half of the spherical aberration due to the objective lens system and second record carrier in combination.

The present invention provides an optical scanning device having improved wavefront aberration compensation characteristics, compared to prior art devices having a single objective lens system for scanning three different formats of optical record carrier.

Features and advantages of the present invention will become apparent from the following description of a preferred embodiment of the invention, given by way of example only, made with reference to the accompanying drawings.

DESCRIPTION OF DRAWINGS

Figure 1 is a schematic diagram of an objective lens system in an optical scanning device including a corrector element disposed between a radiation source and an objective lens, the phase corrector comprising a cavity between two plates, the cavity containing interchangeable fluids;
Figure 2 is a schematic diagram of a cross-section through the corrector element of Figure 1 when the optical scanning device is in a BD read/write (or first) mode;

Figure 3 is a schematic diagram of a cross-section through the corrector element of Figure 1 when the optical scanning device is in a DVD read/write (or second) mode;

Figure 4 is a schematic diagram of a cross-section through the corrector element of Figure 1 when the optical scanning device is in a CD read/write (or third) mode;

Figure 5 is a series of graphs showing optical path differences for the BD, DVD and CD objective lens system of Figure 1 when the optical scanning device is in the BD read/write mode;

Figure 6 is a series of graphs showing optical path differences for the BD, DVD and CD objective lens system of Figure 1 when the optical scanning device is in DVD read/write mode; and

Figure 7 is a series of graphs showing optical path differences for the BD, DVD and CD objective lens system of Figure 1 when the optical scanning device is in the CD read/write mode.

Figure 8 is a graph showing a surface sag, within a DVD pupil of a radiation beam, of a wavefront modifier of the corrector element of Figure 1.

DETAILED DESCRIPTION OF PREFERRED EMBODIMENTS OF THE INVENTION

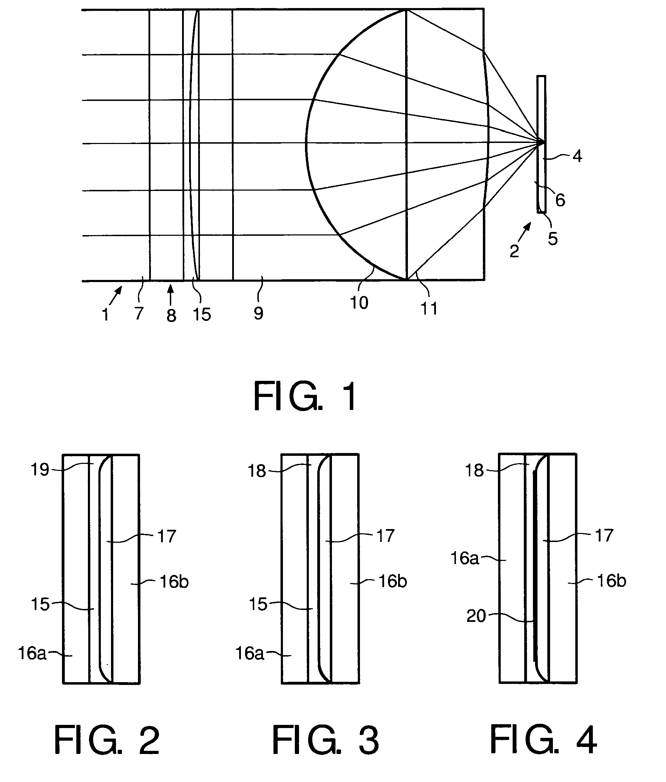

Figure 1 shows part of a device 1 for scanning optical record carriers having cover layers of different depths. The scanning device has a first mode for scanning a first optical record carrier, a second mode for scanning a second optical record carrier and a third mode for scanning third optical record carrier. The first, second and third optical record carriers are of different formats, such as BD, DVD and CD formats, respectively. Each of the first, second and third optical record carriers has a cover layer of a different thickness. Figure 1 illustrates a first optical record carrier 2, however it should be understood that a similar description will apply in relation to the second and third optical record carriers. The record carrier comprises a transparent cover layer 5, on one side of which an information layer 4 is arranged. The side of the information layer 4 facing away from the cover layer 5 is protected from environmental influences by a protection layer (not shown.) The side of the cover layer 5 facing the device is called the entrance face 6. Information may be stored in the information layer 4 of the record carrier in the form of optically detectable marks arranged in substantially parallel, concentric or spiral tracks, not indicated in the Figure. The marks may be in any optically readable form, for example in the form of pits or areas with a reflection coefficient or a direction of magnetization different from their surroundings, or any combination of these forms. The scanning device 1 further comprises a radiation source that emits a radiation beam (not shown.)

Several radiation sources may be used as different wavelengths are appropriate for use in each of the first, second and third modes. For example, radiation of 405 nm is used in BD systems, 650 nm wavelength radiation is used in DVD systems and 785 nm wavelength radiation is used in CD systems.

The radiation beam is used for scanning the information layer 4 of the optical record carrier 2. Disposed between the radiation source and the record carrier 2 are a series of optical elements that may include a beam splitter for reflecting the diverging radiation beam and a collimator lens, which converts the diverging beam into a collimated beam 7. The collimated beam 7 is incident on a switchable optical corrector element 8, which modifies the wavefront of the collimated beam 7. The modified beam 9 coming from the optical element 8 is incident on an objective lens 10.

In this embodiment, the objective system is a single objective lens. However, the objective system may comprise one or more lenses and/or a grating. The objective lens 10 changes the modified beam 9 to a converging beam 11, incident on the entrance face 6 of the record carrier 2. The converging beam 11 forms a spot on the information layer 4. Radiation reflected by the information layer forms a diverging beam, transformed into a substantially collimated beam by the objective lens 10 and subsequently transmitting at least part of the converging beam towards a detection system (not shown.)

The detection system captures the radiation and converts it into electrical output signals. A signal processor converts these output signals to various other signals. One of the signals is an information signal, the value of which represents information read from the information layer 4.

The optical corrector 8 includes a cavity 15 into which a first fluid and a second fluid can be interchangeably switched, preferably by electrowetting, as described in WO 04/027490. The cavity 15 includes a shaped interior surface. The shaped interior surface of the corrector element 8 can be generally described as a wavefront modifier which includes a non-periodic phase structure (NPS) superimposed on top of an aspherical surface. The NPS includes a plurality of stepped annular zones separated by steps, the zones forming a non-periodic radial pattern. This shape is formed by the NPS 20 on a diacryl layer 17. The objective lens 10 is designed to give substantially zero spherical aberration in combination with the information layer 4 of the first optical record carrier 2 in the first mode, while in combination with the information layer of the second optical record carrier in the second mode gives rise to spherical aberration, and in combination with the information layer of the third optical record carrier in the third mode also gives rise to spherical aberration.

The switchable optical corrector element 8 is designed to have substantially no effect in the first mode. That is to say, the corrector element 8 gives rise to substantially zero spherical aberration in the first mode where a first fluid is in the chamber of the corrector element 8. The refractive index of the first fluid is substantially equal to the refractive index of the layer 17 of the wavefront modifier. The refractive index of the second fluid, on the other hand, is significantly different to the refractive index of the layer of the wavefront modifier. This gives rise to desired amounts of spherical aberration in the second and third mode where the second fluid is in the corrector 8. The interior surface of the corrector 8 is designed such that, in the second mode the amount of spherical aberration generated by the aspherical surface of the corrector 8 compensates more than half of spherical aberration arising due to the objective lens 10 and second record carrier in combination.

The aspherical coefficient B describing the interior surface complies with:

$$|B| > 0.5 B_0$$

where:

$$B_0 = \left| \frac{\Delta d \left( n_d^2 - 1 \right)}{8 \left( n_p - n_l \right) F^4 n_d^3} \right|$$

in which:

Δd is the cover layer thickness difference between the first and second optical record carriers;
$n_d$ is the refractive index of the second record carrier;
$n_l$ is the refractive index of the second fluid;
$n_p$ is the refractive index of the material of the layer 17 of the wavefront modifier; and
F is the focal length of the objective lens.

The amount of lowest order spherical aberration due to a cover layer thickness change of Δd is given by:

$$W_{disc} = -\frac{\left( n_d^2 - 1 \right)}{8 n_d^3} \Delta d N A^4$$

where:

Δd is cover layer thickness difference between the first and second optical record carriers;
$n_d$ is the refractive index of the second record carrier; and
NA is the numerical aperture of the objective lens system in the second mode.

An aspherical surface of the interior of the cavity of the binary switch is described by a surface sag of:

$$z(r) = Ar^2 + Br^4 + Cr^6 + \ldots$$

where r is the radial coordinate, gives rise to a phase change Λ(r) to the radiation beam of

$$\Lambda(r) = \frac{2\pi \left( n_p - n_l \right)}{\lambda} z(r)$$

in which:

$n_l$ is the refractive index of the second fluid;
$n_p$ is the refractive index of the material of the wavefront modifier; and
λ the wavelength of the radiation beam in the second mode.

As a result the amount of spherical aberration generated at the information layer of the optical record carrier is approximately given by:

$$W_{surf} = B \left( n_p - n_l \right) F^4 N A^4$$

where F is the focal length of the objective.

In order that the aspherical surface in the electrowetting switch compensates substantially the cover layer thickness Δd the value B of complies with:

$$|B| \approx B_0$$

where:

$$B_0 \approx \left| \frac{\Delta d \left( n_d^2 - 1 \right)}{8 \left( n_p - n_l \right) F^4 n_d^3} \right|$$

According to the invention the aspherical surface of the interior of the switch complies with:

$$|B| > 0.5 B_0$$

where:

$$B_0 = \left| \frac{\Delta d \left( n_d^2 - 1 \right)}{8 \left( n_p - n_l \right) F^4 n_d^3} \right|$$

in which:

 Δd is the cover layer thickness difference between the first and second modes;
 $n_d$ is the refractive index of the second record carrier;
 $n_l$ is the refractive index of the second fluid;
 $n_p$ is the refractive index of the material of the wavefront modifier; and
 F is the focal length of the objective lens.

A corrector element 8 in accordance with one embodiment of the invention is shown in more detail in Figures 2 to 4. The corrector element 8 comprises a cavity 15 between two glass plates 16a 16b. On the glass plate 16b a diacryl layer 17 is deposited. The cavity between the diacryl layer 17 and the glass plate 16a can be interchangeably filled with salted water 18 or oil 19. When radiation of 405 nm is used, i.e. when the optical scanning system is in BD mode, the oil has a refractive index of 1.56, which is equal to that of the diacryl layer 17. However when radiation of this wavelength is used, the salted water has a refractive index of 1.37. In BD mode, the cavity 15 is filled with oil 19 and consequently the surface between the diacryl layer 17 and the oil 19 is invisible due to the matching refractive index. Therefore, the corrector 8 has no effect on the wavefront of the radiation beam and, with a BD objective lens; a BD can be written and read.

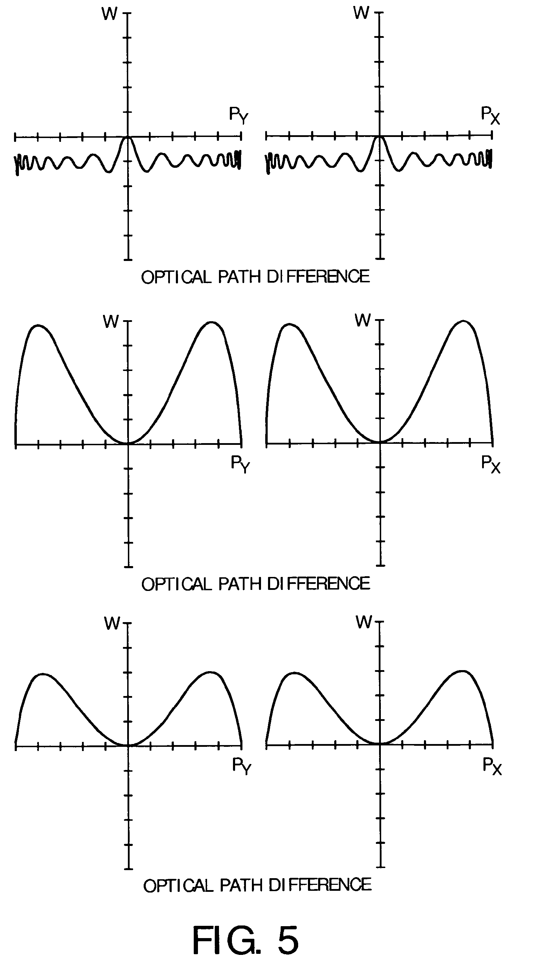

The graphs of Figures 5, 6 and 7 are plotted on a set of axes where the horizontal axis indicates a normalized pupil coordinate for the CD pupil of the radiation beam for either an x axis, indicated by ρx in the Figures, or a perpendicular y axis, indicated by ρy in the Figures, of a radial cross section of the radiation beam. The normalized coordinate has a minimum value of 0 at the intersection between the horizontal axis and the vertical axis, and a maximum value of 1 at each end of the axis. The vertical axis, indicated by W in the Figures, indicates the optical path difference of the radiation beam in units of wavelength λ.

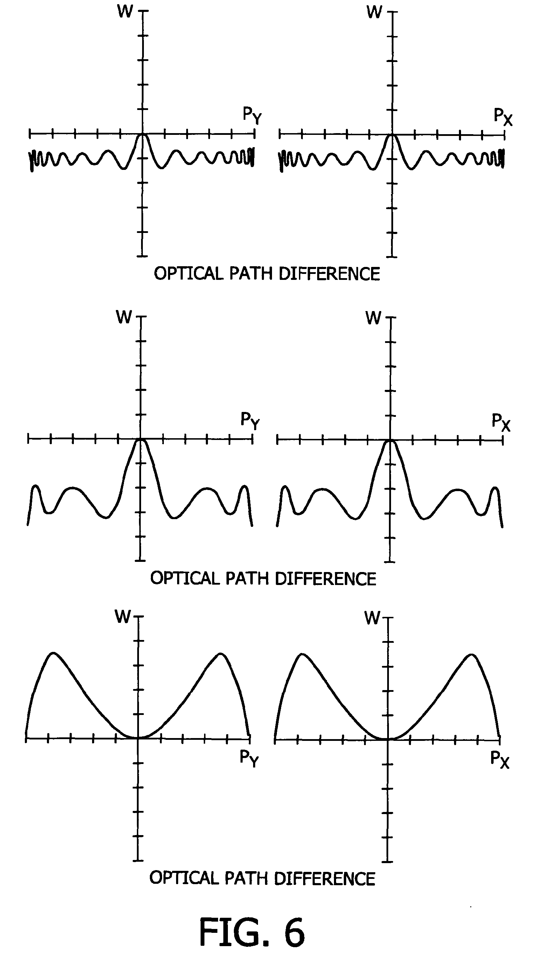

Figure 5 shows the wavefront aberrations for the optical scanning system in BD mode i.e. radiation suitable for use in BD, DVD and CD readout is used with the corrector element in BD mode. In the BD, DVD, and CD mode the total RMS wavefront aberration is 0 mλ, 575 mλ, and 375 mλ, respectively. The major aberration is the primary spherical aberration. When the optical scanning device is to be used in the DVD or CD mode the cavity 15 is filled with salted water 18. The aspherical shape of the surface between the diacryl layer 17 and the water salted 18 is such that, in DVD mode, radiation with a wavelength of 660 nm will be focused on the information layer 4 in the DVD without substantial amounts of aberration. Furthermore, on the diacryl layer 17 there is non-periodic structure (NPS) 20 for correcting the spherical aberration when, in CD mode, a CD is read with 785 nm radiation. When the optical scanning device is to be used in DVD mode, i.e. the record carrier is a DVD, the corrector element is filled with salted water 18 of which the refractive index differs from that of the diacryl layer 17. The surface of the diacryl layer 17 has such a shape that it introduces 575 mλ spherical aberration within a NA = 0.65 pupil. As a result of this the total RMS wavefront aberration for DVD is 0 mλ. Furthermore, the magnitude of the wavefront aberration in CD mode is reduced as can be seen in figure 6.

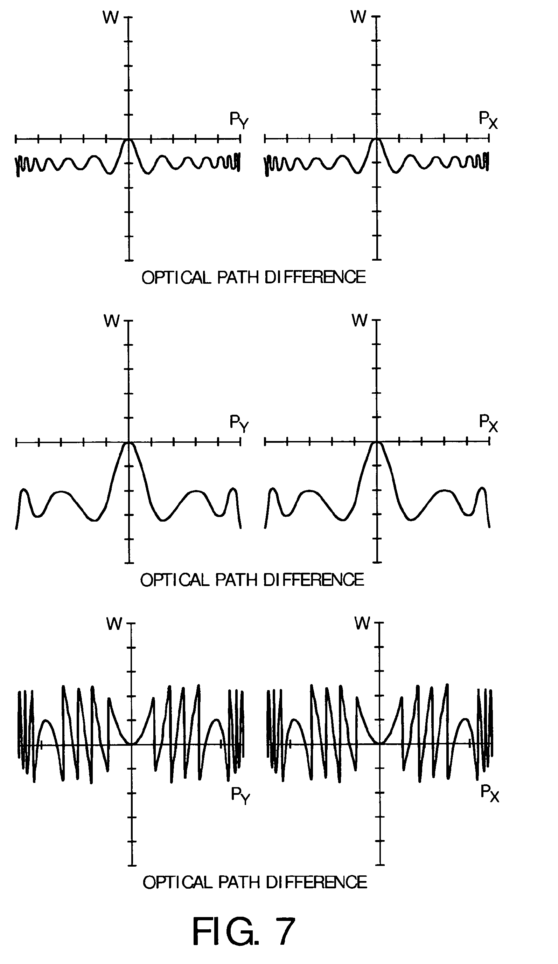

On top of the curved aspherical surface of the diacryl layer 17 the NPS 20 is introduced to reduce the wavefront aberration when the optical scanning device is in the CD mode, i.e. the radiation beam is of a wavelength suitable for CD read/write mode. The NPS steps are invisible for radiation suitable for DVD readout but introduce certain phases for radiation suitable for CD readout. These different phases can be used to reduce the OPD in the CD mode. In figure 7, the optical path differences for the objective lens 10 for the three scanning modes (BD/DVD/CD) when the optical scanning device is in CD read/write mode are shown, i.e. the radiation suitable for use in BD, DVD and CD readout is used with the corrector element in CD mode. As can be seen, the total RMS wavefront aberration is 0 mλ, 1 mλ, and 3 mλ, respectively, which is well below the diffraction limit of 70 mλ.

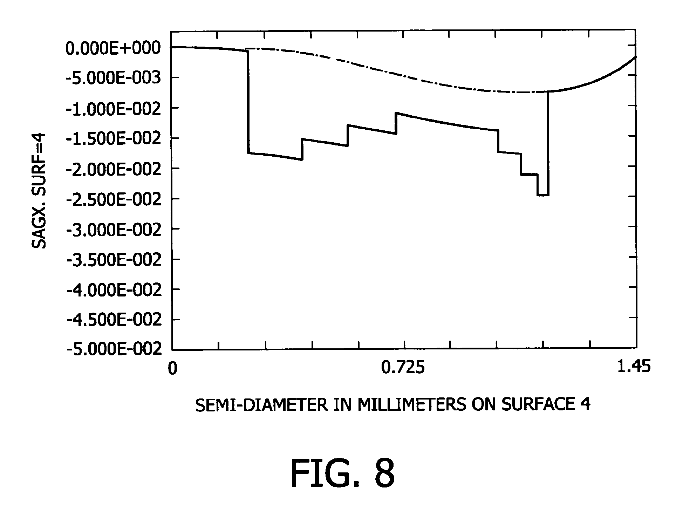

Figure 8 shows the surface sag of the diacryl layer 17 with the basic aspherical surface shape NPS 20 within the DVD pupil. Note that, outside the central part corresponding to the DVD pupil the surface shape may be freely designed as long as the rays outside the DVD pupil will not deteriorate the quality of the DVD radiation spot on the information layer 4 of the record carrier 2.

For the modes and systems described above, the following parameters are used:

 F=2.47mm
 B=0.00317 mm$^{-3}$
 $n_l$=1.37
 $n_p$=1.56
 $n_d$=1.57
 Δd=0.5mm

So we find from the equations given above that $B_0$=0.00335 mm$^{-3}$ and hence B> 0.5B$_0$. For triple mode systems such as those described above, if the aspherical coefficient B describing the interior surface of the corrector element complies with B> 0.5B$_0$ then an objective lens system capable of correcting for different amounts of spherical aberration arising due to the combination of objective lens system and three wavelengths will result.

The above embodiments are to be understood as illustrative examples of the invention. Further embodiments of the invention are envisaged.

In the above embodiments, a switchable optical corrector is provided in the form of an NPS structure on a base surface which follows an aspherical surface shape, and the NPS structure is formed as a height variation with reference to the lens surface shape as the base profile. Alternatively, a wavefront according to the invention may be provided in the form of two separate elements, for example one NPS element on a flat base plate and a separate aspherical surface element. The two elements may form two sides of the cavity in the switchable optical corrector and have a combined effect which is similar to the NPS structure formed on top of an aspherical surface as described above.

It will be appreciated that the fluids in the corrector element 8 need not be oil and salted water but that any suitable fluids having the appropriate refractive index may be used. In the above description, the first fluid is electrically insulative and the second fluid is electrically conductive. Alternatively, the first fluid may be electrically conductive, but less conductive than the second fluid. Furthermore, the layer 17 need not be formed from diacryl but any other suitable material may be used, for example hexanediol diacrylate (HDDA). It will also be appreciated that the invention is not limited to use in BD/DVD/CD systems but that any optical scanning device requiring three separate wavelengths of radiation for readout may be anticipated.

As described previously, the cavity is filled with the first or the second fluid when the element is in the first or the second state, respectively. Alternatively, the cavity may be filled with both the first fluid and the second fluid with the element in either state. In this case, the fluids are separated by a fluid meniscus and switching of the state determines whether walls of the cavity are covered by the first or the second fluid. In the above description, the method of switching the salted water 18 for the oil 19 in the cavity 15 has not been discussed in detail. Methods for achieving this aim using electrowetting forces are known from WO 04/027490, the contents of which are incorporated herein by reference. Different forces may alternatively be used to switch the fluids.

In the above embodiments, the phase structure used is in the form of an NPS. In alternative embodiments, a diffractive grating structure, including a plurality of stepped annular zones, is used as the phase structure to provide a wavelength-dependent wavefront modification similar to the effect of the NPS as described above. In further alternative embodiments, a combination of NPS and diffractive grating structure may be used.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An optical scanning device (1) for scanning optical record carriers (2) having cover layers of different thicknesses, the scanning device having a first mode for scanning a first optical record carrier, a second mode for scanning a second optical record carrier and a third mode for scanning third optical record carrier, the device comprising an objective lens system (10) and a switchable optical element (8) having a first discrete state and a different, second discrete state, the element comprising:

   a) a fluid system including a first fluid (18) and a different, second fluid (19);
   b) a wavefront modifier (17); and
   c) a fluid system switch for acting on the fluid system to switch between the first and second discrete states of the element,

   wherein, when the element is in the first discrete state, the wavefront modifier (17) is substantially covered by the first fluid (18), and when the element is in the second discrete state, the wavefront modifier (17) is substantially covered by the second fluid (19), the wavefront modifier including a phase structure including a plurality of stepped annular zones, **characterized in that** the wavefront modifier further includes an aspherical surface, the scanning device being arranged to operate using said element (8) in said second state to generate spherical aberration when in said second mode, the aspherical surface of the element (8) in the second state compensating for more than half of the spherical aberration due to the objective lens system (10) and second record carrier in combination.

2. An optical scanning device according to claim 1, wherein the scanning device is arranged to operate using said element (8) in said first state when in said first mode.

3. An optical scanning device according to claim 1 or 2, in which the aspherical surface has an aspherical coefficient B where $|B| > 0.5 B_0$ and where

$$B_0 = \left| \frac{\Delta d \left( n_d^2 - 1 \right)}{8 \left( n_p - n_l \right) F^4 n_d^3} \right|$$

and where:

Δd is the cover layer thickness difference between the first and second optical record carriers;

$n_d$ is the refractive index of the second record carrier;

$n_l$ is the refractive index of the second fluid;

$n_p$ is the refractive index of the material of the wavefront modifier; and

F is the focal length of the objective lens system.

4. An optical scanning device according to any preceding claim, in which the phase structure includes a non-periodic phase structure having a plurality of stepped annular zones separated by steps, the zones forming a non-periodic radial pattern.

5. An optical scanning device according to any of claims 1 to 3, in which the phase structure includes a diffractive phase structure.

6. An optical scanning device according to any preceding claim, in which the phase structure is substantially invisible in said second mode.

7. An optical scanning device according to any preceding claim, in which the phase structure is arranged to compensate for spherical aberration in said third mode.

8. An optical scanning device according to any preceding claim, in which the first fluid (19) and the wavefront modifier (17) comprise materials of substantially the same refractive index.

9. An optical scanning device according to any preceding claim, in which the first fluid (19) is oil, the second fluid (18) is salted water, and the wavefront modifier (17) is formed from diacryl.

10. An optical scanning device according to any preceding claim, in which the device is arranged to generate first, second and third radiation beams, each of a different predetermined wavelength, in said first, second and third modes, respectively.

11. An optical scanning device according to claim 10, in which the different wavelengths are approximately 405 nm, 660 nm and 785 nm respectively.

12. An optical scanning device according to any preceding claim, capable of reading from and/or writing to BDs, DVDs, and CDs.

**Patentansprüche**

1. Optische Abtasteinrichtung (1) zum Abtasten optischer Aufzeichnungsträger (2), die Deckschichten mit unterschiedlichen Dicken haben, wobei die Abtasteinrichtung einen ersten Modus zum Abtasten eines ersten optischen Aufzeichnungsträgers, einen zweiten Modus zum Abtasten eines zweiten optischen Aufzeichnungsträgers und einen dritten Modus zum Abtasten eines dritten optischen Aufzeichnungsträgers aufweist, wobei die Einrichtung ein Objektivlinsensystem (10) umfasst und ein schaltbares optisches Element (8), das einen ersten diskreten Zustand und einen unterschiedlichen, zweiten diskreten Zustand hat, wobei das Element Folgendes umfasst:

a) ein Fluidsystem, das ein erstes Fluid (18) und ein unterschiedliches, zweites Fluid (19) enthält;
b) einen Wellenfrontmodifikator (17) und
c) einen Fluidsystemschalter zum Einwirken auf das Fluidsystem, um zwischen dem ersten und dem zweiten diskreten Zustand des Elementes zu schalten,

wobei, wenn das Element sich in dem ersten diskreten Zustand befindet, der Wellenfrontmodifikator (17) nahezu von dem ersten Fluid (18) bedeckt ist, und

wenn das Element sich in dem zweiten diskreten Zustand befindet, der Wellenfrontmodifikator (17) nahezu von dem zweiten Fluid (19) bedeckt ist wobei der Wellenfrontmodifikator eine Phasenstruktur enthält, die eine Vielzahl gestufter ringförmiger Zonen enthält,

**dadurch gekennzeichnet, dass** der Wellenfrontmodifikator weiterhin eine asphärische Oberfläche enthält, wobei die Abtasteinrichtung eingerichtet ist, unter Verwendung des im zweiten Zustand befindlichen genannten Elementes (8) zu funktionieren, um sphärische Aberration zu erzeugen, wenn der genannte zweite Modus vorliegt, wobei die asphärische Oberfläche des im zweiten Zustand befindlichen Elementes (8) mehr als die Hälfte der vom Objektivlinsensystem (10) und dem zweiten Aufzeichnungsträger zusammen verursachten sphärischen Aberration kompensiert.

2. Optische Abtasteinrichtung nach Anspruch 1, wobei die Abtasteinrichtung eingerichtet ist, unter Verwendung des im ersten Zustand befindlichen genannten Elementes (8) zu funktionieren, wenn der genannte erste Modus vorliegt.

3. Optische Abtasteinrichtung nach Anspruch 1 oder 2, in der die asphärische Oberfläche einen asphärischen Koeffizienten B aufweist, mit $|B| > 0,5 B_0$ und mit

$$B_0 = \left| \frac{\Delta d \left(n_d^2 - 1\right)}{8\left(n_p - n_l\right)F^4 n_d^3} \right|$$

und wobei:

$\Delta d$ die Deckschicht-Dickendifferenz zwischen den ersten und zweiten optischen Aufzeichnungsträgern ist;

$n_d$ die Brechzahl des zweiten Aufzeichnungsträgers;

$n_l$ die Brechzahl des zweiten Fluids;

$n_p$ die Brechzahl des Materials des Wellenfrontmodifikators und

F die Brennweite des Objektivlinsensystems ist.

4. Optische Abtasteinrichtung nach einem beliebigen vorhergehenden Anspruch, in der die Phasenstruktur eine nicht periodische Phasenstruktur enthält, die eine Vielzahl durch Stufen getrennter gestufter ringförmiger Zonen aufweist, wobei die Zonen ein nicht periodisches radiales Muster bilden.

5. Optische Abtasteinrichtung nach einem der Ansprüche 1 bis 3, in der die Phasenstruktur eine beugende Phasenstruktur enthält.

6. Optische Abtasteinrichtung nach einem beliebigen vorhergehenden Anspruch, in der die Phasenstruktur in dem genannten zweite Modus nahezu unsichtbar ist.

7. Optische Abtasteinrichtung nach einem beliebigen vorhergehenden Anspruch, in der die Phasenstruktur eingerichtet ist, sphärische Aberration in dem genannten dritten Modus zu kompensieren.

8. Optische Abtasteinrichtung nach einem beliebigen vorhergehenden Anspruch, in der das erste Fluid (19) und der Wellenfrontmodifikator (17) Materialien mit nahezu der gleichen Brechzahl umfassen.

9. Optische Abtasteinrichtung nach einem beliebigen vorhergehenden Anspruch, in der das erste Fluid (19) Öl ist, das zweite Fluid (18) Salzwasser ist und der Wellenfrontmodifikator (17) aus Diacryl gebildet ist.

10. Optische Abtasteinrichtung nach einem beliebigen vorhergehenden Anspruch, in der die Einrichtung eingerichtet ist, in dem genannten ersten, zweiten bzw. dritten Modus erste, zweite und dritte Strahlungsbündel zu erzeugen, jedes mit einer unterschiedlichen zuvor bestimmten Wellenlänge.

11. Optische Abtasteinrichtung nach Anspruch 10, in der die unterschiedlichen Wellenlängen ungefähr 405 nm, 660 nm bzw. 785 nm betragen.

12. Optische Abtasteinrichtung nach einem beliebigen vorhergehenden Anspruch, die fähig ist, BDs, DVDs und CDs auszulesen und/oder zu beschreiben.

**Revendications**

1. Dispositif de balayage optique (1) pour balayer des supports d'enregistrement optiques (2) ayant des couches de recouvrement d'épaisseurs différentes, le dispositif de balayage ayant un premier mode pour balayer un premier support d'enregistrement optique, un deuxième mode pour balayer un deuxième support d'enregistrement optique et un troisième mode pour balayer un troisième support d'enregistrement optique, le dispositif comprenant un système de lentilles d'objectif (10) et un élément optique commutable (8) ayant un premier état discret et un deuxième état discret différent, l'élément comprenant:

a) un système fluidique comprenant un premier fluide (18) et un deuxième fluide différent (19);
b) un modificateur de front d'onde (17); et
c) un commutateur de système fluidique pour agir sur le système fluidique de manière à commuter entre les premier et deuxième états discrets de l'élément,

dans lequel, lorsque l'élément se situe dans le premier état discret, le modificateur de front d'onde (17) est sensiblement recouvert du premier fluide (18), et lorsque l'élément se situe dans le deuxième état discret, le modificateur de front d'onde (17) est sensiblement recouvert du deuxième fluide (19), le modificateur de front d'onde comprenant une structure de phase comprenant une pluralité de zones annulaires échelonnées, **caractérisé en ce que** le modificateur de front d'onde comprend encore une surface asphérique, le dispositif de balayage étant agencé de manière à fonctionner à l'aide dudit élément (8) dans ledit deuxième état afin de générer une aberration sphérique lorsque, dans ledit deuxième mode, la surface asphérique de l'élément (8) dans le deuxième état compense plus de la moitié de l'aberration sphérique du fait du système de lentilles d'objectif (10) et du deuxième support d'enregistrement en combinaison.

2. Dispositif de balayage optique selon la revendication 1, dans lequel le dispositif de balayage est agencé de manière à fonctionner à l'aide dudit élément (8) dans ledit premier état lorsqu'il se situe dans ledit premier mode.

**3.** Dispositif de balayage optique selon la revendication 1 ou 2, dans lequel la surface asphérique présente un coefficient asphérique B où $|B| > 0,5B_0$ et où

$$B_0 = \left| \frac{\Delta d (n_d^2 - 1)}{8(n_p - n_l)F^4 n_d^3} \right|$$

et où;

$\Delta d$ est la différence d'épaisseur de la couche de recouvrement entre les premier et deuxième supports d'enregistrement optiques;
$n_d$ est l'indice de réfraction du deuxième support d'enregistrement;
$n_l$ est l'indice de réfraction du deuxième fluide;
$n_p$ est l'indice de réfraction du matériau du modificateur de front d'onde; et
F est la longueur focale du système de lentilles d'objectif.

**4.** Dispositif de balayage optique selon l'une quelconque des revendications précédentes 1 à 3, dans lequel la structure de phase comprend une structure de phase non périodique ayant une pluralité de zones annulaires échelonnées qui sont séparées par des échelons, les zones constituant une configuration radiale non périodique.

**5.** Dispositif de balayage optique selon l'une quelconque des revendications précédentes 1 à 3, dans lequel la structure de phase comprend une structure de phase de diffraction.

**6.** Dispositif de balayage optique selon l'une quelconque des revendications précédentes 1 à 5, dans lequel la structure de phase est sensiblement invisible dans ledit deuxième mode.

**7.** Dispositif de balayage optique selon l'une quelconque des revendications précédentes 1 à 6, dans lequel la structure de phase est agencée de manière à compenser l'aberration sphérique dans ledit troisième mode.

**8.** Dispositif de balayage optique selon l'une quelconque des revendications précédentes 1 à 7, dans lequel le premier fluide (19) et le modificateur de front d'onde (17) comprennent des matériaux ayant sensiblement le même indice de réfraction.

**9.** Dispositif de balayage optique selon l'une quelconque des revendications précédentes 1 à 8, dans lequel le premier fluide (19) est de l'huile, le deuxième fluide (18) est de l'eau salée et le modificateur de front d'onde (17) est formé à partir de diacryle.

**10.** Dispositif de balayage optique selon l'une quelconque des revendications précédentes 1 à 9, dans lequel le dispositif est agencé de manière à générer des premier, deuxième et troisième faisceaux de rayonnement, chacun ayant une longueur d'onde prédéterminée différente dans lesdits premier, deuxième et troisième modes, respectivement.

**11.** Dispositif de balayage optique selon la revendication 10, dans lequel les longueurs d'onde différentes sont de l'ordre de 405 nm, de 660 nm et de 785 nm, respectivement.

**12.** Dispositif de balayage optique selon l'une quelconque des revendications précédentes 1 à 11, qui est capable de lire à partir de et/ou d'écrire dans des BD, des DVD et des CD.

FIG. 1

FIG. 2         FIG. 3         FIG. 4

OPTICAL PATH DIFFERENCE

OPTICAL PATH DIFFERENCE

OPTICAL PATH DIFFERENCE

FIG. 5

OPTICAL PATH DIFFERENCE

OPTICAL PATH DIFFERENCE

OPTICAL PATH DIFFERENCE

FIG. 6

OPTICAL PATH DIFFERENCE

OPTICAL PATH DIFFERENCE

OPTICAL PATH DIFFERENCE

FIG. 7

SEMI-DIAMETER IN MILLIMETERS ON SURFACE 4

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02082437 A
- US 5973852 A
- WO 0058763 A
- US 6288846 B
- US 6408112 B
- WO 04027490 A